# EUROPEAN PATENT SPECIFICATION

(11) **EP 1 986 908 B1**
(45) Date of publication and mention of the grant of the patent: **12.03.2014**
(21) Application number: 07715840.0
(22) Date of filing: 14.02.2007
(51) Int. Cl.: B62B 7/08

(54) **STROLLER**
KINDERWAGEN
POUSSETTE

(30) Priority: 22.02.2006 NL 1031214
(43) Date of publication of application: 05.11.2008
(73) Proprietor: Maxi Miliaan B.V., 5704 RD Helmond (NL)
(72) Inventor: VAN DIJK, John, Gert, Til, NL-5701 SK Helmond (NL)
(74) Representative: Veldman-Dijkers, Cornelia G. C.
(86) International application number: PCT/NL2007/000041
(87) International publication number: WO 2007/097613

(56) References cited:
- EP-A2- 0 494 736
- EP-A2- 1 190 931
- DE-U1- 20 220 024
- US-A- 5 622 377

## Description

The invention relates to a stroller comprising a collapsible frame, which frame at least comprises: .
- a first frame part provided with at least one front wheel,
- a second frame part provided with at least one rear wheel, which second frame part is pivotally connected on a side remote from the rear wheel to a side of the first frame part remote from the front wheel via a first pivot axis,
- a third frame part provided with a handle,
   which frame further comprises:
   - at least one first pivot arm, which is pivotally connected to a side of the third frame part remote from the handle with a first side via a second pivot axis, and which is pivotally connected to said second frame part with a second side remote from said first side via a third pivot axis at a position between the rear wheel and the first pivot axis,
   - at least one second pivot arm, which is pivotally connected to the third frame part with a first side, at a position between the second pivot axis and the handle, and which is pivotally connected to the first and the second frame part with a second side remote from the first side at a position near the first pivot axis, with the third frame part being positioned on a side of the second frame part remote from the first frame part in a collapsed position of the stroller.

With such a stroller, which is known from US patent US-A-5,622,377, the first pivot arm is pivotally connected on a side of the third pivot axis remote from the second pivot axis to a rod that is pivotally connected to the first frame part on a side remote from the first pivot arm. Because of this connection the front wheels and the rear wheels are not moved together during a first collapsing phase, whereas such movement of the rear wheels and the front wheels towards each other does take place during a second collapsing phase. A drawback of said stroller is that all the movements of the collapsible frame are dependent on the movement of the first pivot arm.

The object of the invention is to provide a stroller in which the movement of the front and the rear wheels to a position relatively close together takes place independently of the first pivot arm, which stroller can moreover folded to a relatively compact configuration.

This object is accomplished with the stroller according to the invention in that the frame further comprises a collapsible fourth frame part, which is pivotally connected to the first frame part with a first side via a pivot axis at a position between the front wheel and the first pivot axis, which fourth frame part is pivotally connected to the first pivot arm with a second side remote from the first side via a pivot axis at a position between the second and the third pivot axis, with the front wheel being positioned closer to the rear wheel in the collapsed position of the fourth frame part than in the unfolded position of the fourth frame part.

The fourth unfolded frame part provides a stable connection between the first frame part and the second frame part. Since the fourth frame part is moreover connected to the third frame part via the first pivot arm, a strong interconnection between all the frame parts is obtained. The user himself or herself decides when he or she wishes to collapse the fourth frame part. Until the moment when the fourth frame part is collapsed, the front wheels and the rear wheels are for example spaced so far apart that the stroller can stand on its front and rear wheels in the partially collapsed position. The third frame part does not form an impediment for the first frame part, since said third frame part is positioned on a side of the second frame part remote from the first frame part in the collapsed position of a stroller.

In an unfolded position of the stroller, the third frame part is preferably in line with the first frame part.

It is noted that with such a stroller, which is known from German utility model DE-U1-202.20.024, the first frame part comprises two rods extending from a front wheel, which rods are connected to the second frame part on a side remote from the front wheel. The second frame part likewise comprises two rods, which are connected by a cross rod on a side remote from the first frame part. The second frame part is provided with two rear wheels. The second frame part is connected to the first frame part via two first pivot axes. The third frame part comprises two parallel rods, which are connected via a push bracket that forms a handle. Each rod of the third frame part is connected to a rod of the first frame part via a parallelogram mechanism. The parallelogram mechanism enables movement of the third frame part from a position in line with the first frame part to a position substantially on the rods of the first frame part.

Usually a seating or reclining portion for a child to be carried in the stroller can be connected to or between the first frame part. With the known stroller there is a risk that the third frame part and the seating/reclining portion of the stroller will be in each other's way when the third frame part is positioned on the first frame part. If the third frame part should undesirably become detached, for example when the stroller hits a kerb, the third frame part will be moved towards the child that is seated in the stroller, so that there is a risk of the child being hurt.

One embodiment of the stroller according to the invention is characterised in that the second pivot arm is at least partially in line with the first and the third frame part in an unfolded position of the stroller.

In this way the second pivot arm forms substantially one whole with the first and the third frame part, so that the stroller does not comprise any undesirably projecting parts.

Another embodiment of the stroller according to the invention is characterised in that the frame can be locked in an unfolded position.

This prevents the frame from unexpectedly and undesirably moving from the unfolded position to the collapsed position.

Yet another embodiment of the stroller according to the invention is characterised in that the stroller is provided with two parallel first and/or second pivot arms, which are disposed on either side of the frame.

By disposing pivot arms on either side of the frame a stable frame is obtained.

Yet another embodiment of the stroller according to the invention is characterised in that the fourth frame part can be locked in the unfolded position.

In this way undesirable collapsing of the fourth part is prevented in a simple manner. The locked position of the fourth frame part as well as the locking engagement between the first, the second and the third frame part must be released upon collapsing of the stroller. Preferably, the locking engagement between the first, the second and a third frame part is released first, thereby enabling the fourth frame part to collapse.

The invention will now be explained in more detail with reference to the drawings, in which:
Figures 1A and 1B are a perspective view and a front view of a stroller according to the invention;
Figures 2A-2D are various side views of the collapsing of the stroller according to the invention shown in figures 1A-1B;
Figures 3A-3C are side views of the stroller according to the invention during the collapsing of the fourth frame part;
Figure 4A is a perspective view of the stroller shown in figure 2C;
Figure 4B is a detail view of the stroller shown in figure 4A;
Figure 5A is a perspective view of the stroller shown in figure 2B;
Figure 5B is a detail view of the stroller shown in figure 5A;
Figure 6A is a perspective view of the stroller shown in figure 2A;
Figure 6B is a detail view of the stroller shown in figure 6A;
Figure 7A is a side view in which the stroller according to the invention is shown in a partially unfolded position;
Figure 7B is a detail view of the stroller shown in figure 7A;
Figure 7C is a side view of the stroller according to the invention in the unfolded position thereof;
Figure 7D is a detail view of the stroller shown in figure 7C.
Like parts are indicated by the same numerals in the figures. Figures 1A-1B show a stroller 1 according to the invention comprising a V-shaped first frame part 2, which comprises two rods 4 extending from a connector 3 as well as a front wheel 5 supported by the connector 3.

The stroller 1 further comprises a second frame part 6, which comprises two parallel rods 7, which are connected by means of a cross rod 8. Rear wheels 9 are provided near ends of the cross rod 8. The rods 7 of the second frame part 6 are reached pivotally connected to a connector 11 via a first pivot axis 10, which connector is attached to ends of the rods 4 of the first frame part 2 remote from the front wheel 5.

The stroller 1 further comprises a third frame part 12 comprising two parallel rods 13, which are connected by a U-shaped bracket 14. The U-shaped bracket 14 forms a handle by means of which stroller 1 can be pushed along. Ends of the rods 13 remote from the handle 14 are pivotally connected to first pivot arms 16 via second pivot axes 15. The first pivot arms 16 extend parallel to each other. The first pivot arms 16 are pivotally connected at their ends remote from the second pivot axes 15 to rods 7 of the second frame part 6 via third pivot axes 17.

The rods 13 of the third frame part 12 are furthermore pivotally connected to second pivot arms 19 via pivot axes 18. The second pivot arms 19 are pivotally connected to the connectors 11 on the side remote from the pivot axes 18 via pivot axes 20.

The stroller 1 further comprises a fourth frame part 21, which is pivotally connected to rods 4 of the first frame part 2, via pivot axes 22, with a first side and to the first pivot arms 16, via pivot axes 23, with a second side remote from said first side. The pivot axes 23 are positioned between the second and the third pivot axes 15, 17 on lateral arms 16' of the pivot arms 16. The fourth frame part is collapsible between the pivot axes 22 and 23 via pivot axes 24.

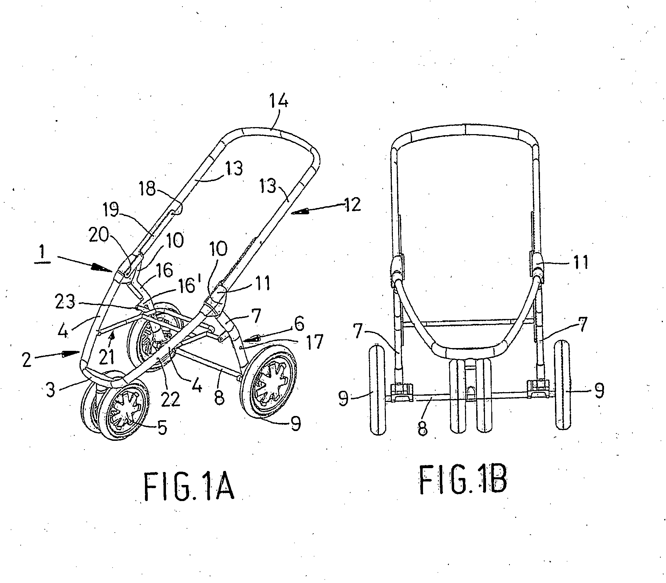

In the unfolded position of the stroller 1 that is shown in figures 1A-1B, the second pivot arms 16 extend substantially parallel to the rods 7 of the second frame part 6.

A child seat or a carrycot may be connected to the connectors 11 and/or the rods 4 in a manner which is known perse.

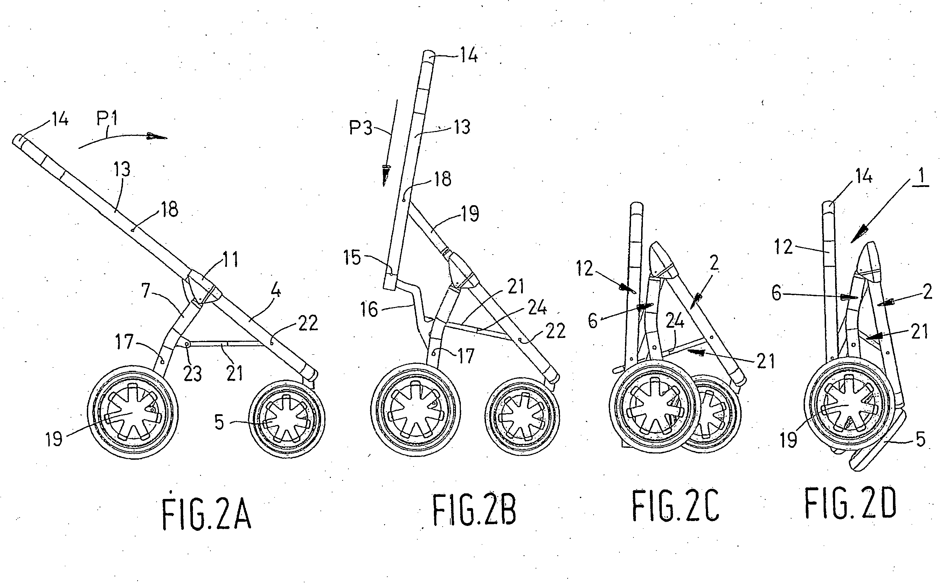

When the stroller 1 is to be collapsed to enable transport thereof in a more compact configuration, the locking engagements are released, after which a user will push the third frame part 12 from the position shown in figure 2A in the direction indicated by the arrow P1, as a result of which the pivot arms 16, 19 are pivoted about the respective pivot axes 17, 20 to the position shown in figure 2B. Then the user may move the third frame part 12 in the direction indicated by arrow P3 to the position shown in fig. 2C. The third frame part 12 is positioned on a side of the second frame part remote from the first frame part 2 in that situation.

Subsequently, in order to be able to collapse the stroller 1 even further, the fourth frame part 21 is folded about the pivot axes 24, thereby making it possible to move the first frame part 2 in the direction of the second frame part 6 (see figure 2D).

When the stroller 1 is to be unfolded again, the user will take hold of the third frame part 12 by the handle 14 and move it in a direction away from the wheels 19, 5. The fourth frame part 21 will then take up the position shown in figures 2A-2C. The third frame part 12 is moved until the third frame part 12 extends substantially parallel to the first frame part 2. Once the third frame part 12 has taken up the position shown in figure 2A, the third frame part 12 will be automatically locked in that position.

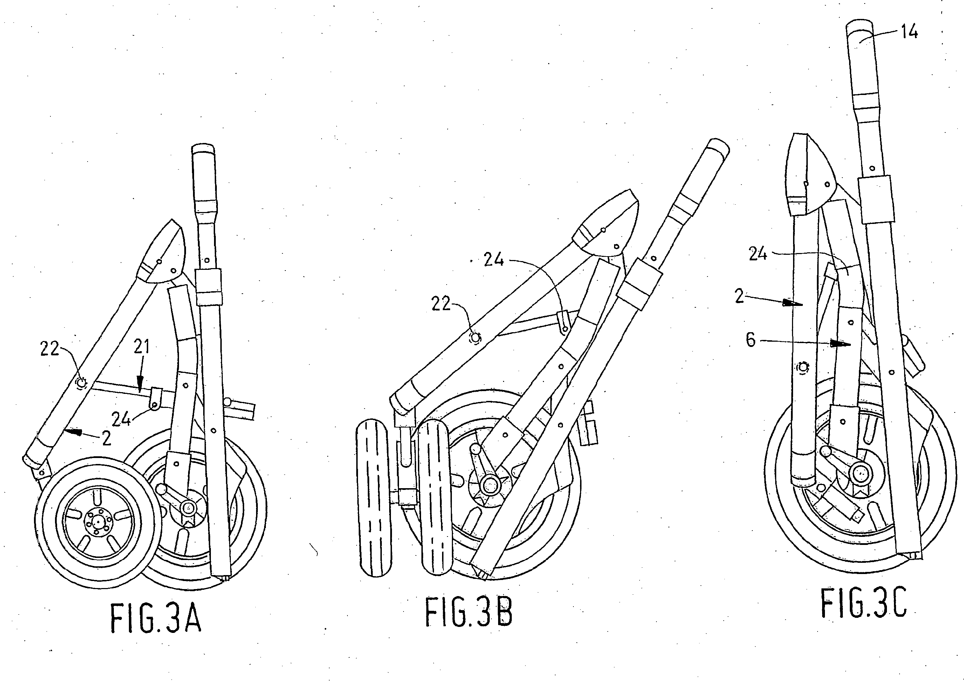

Figures 3A-3C show the collapsing of the fourth frame part 21, with the figures clearly showing that the first frame part 2 is moved closer to the second frame part as a result of the fourth frame part 21 being "folded up".

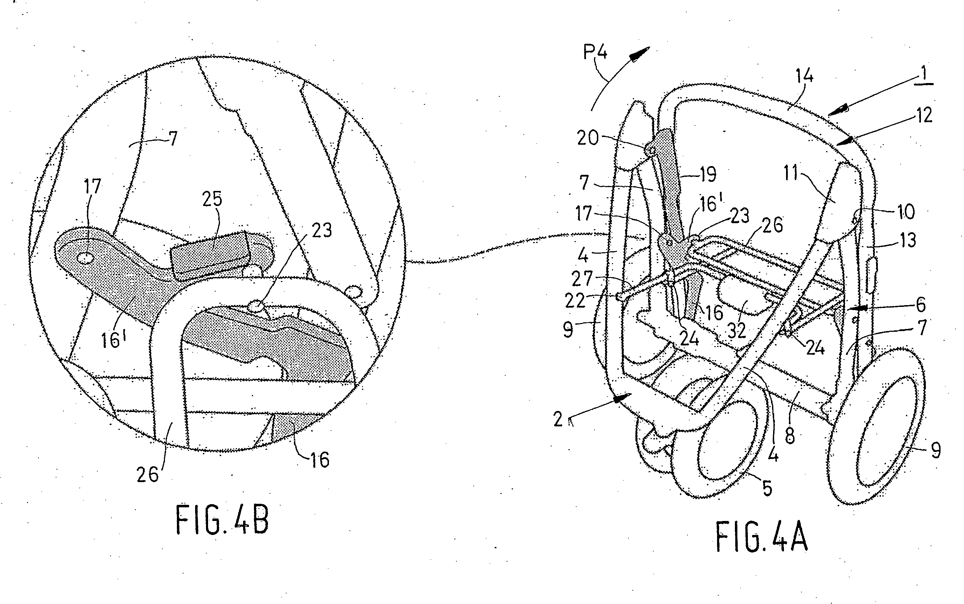

Figures 4A-6B showed the unfolding of the stroller according to the invention, as well as a few details thereof.

As figures 4A and 4B clearly show, the lateral arms 16' of the pivot arms 16 comprises a plate element 25 extending transversely thereto, which plate element extends above a first member 26 of the fourth frame part 21. The first member 26 is pivotally connected via pivot axes 24 to a second member 27, which is pivotally connected at ends remote from the first member 26 to the first frame part 2 via pivot axes 22.

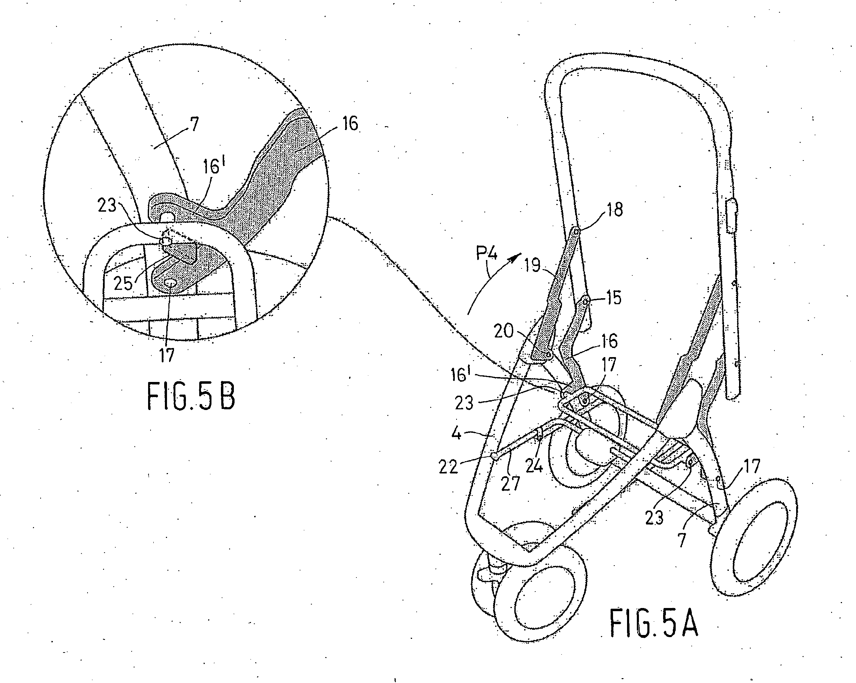

To unfold the stroller 1, the first frame part 2 is pivoted in the direction indicated by the arrow P4. Simultaneously therewith the pivot arms 16 are pivoted in the direction indicated by the arrow P4, resulting in the connected plate element 25 being moved to a position under the first member 26 of the fourth frame part 21 (see figure 5B). By pivoting the first frame part 2 even further in the direction indicated by the arrow P4 from the position shown in figures 5A and 5B, the plate element 25 is brought into contact with the first member 26 of the fourth frame part 21, with the plate element 25 causing the first member 26 to pivot in the direction indicated by the arrow P5, opposite to the direction of the arrow P4, until it is in line with the second member 27 of the fourth frame part 21. The plate element 25 thus functions to move the first element 26 of the fourth frame part 21 to the desired position, but in addition it functions to prevent collapsing of the fourth frame part, which would require the first element 26 to pivot in the direction opposite the direction indicated by the arrow P5.

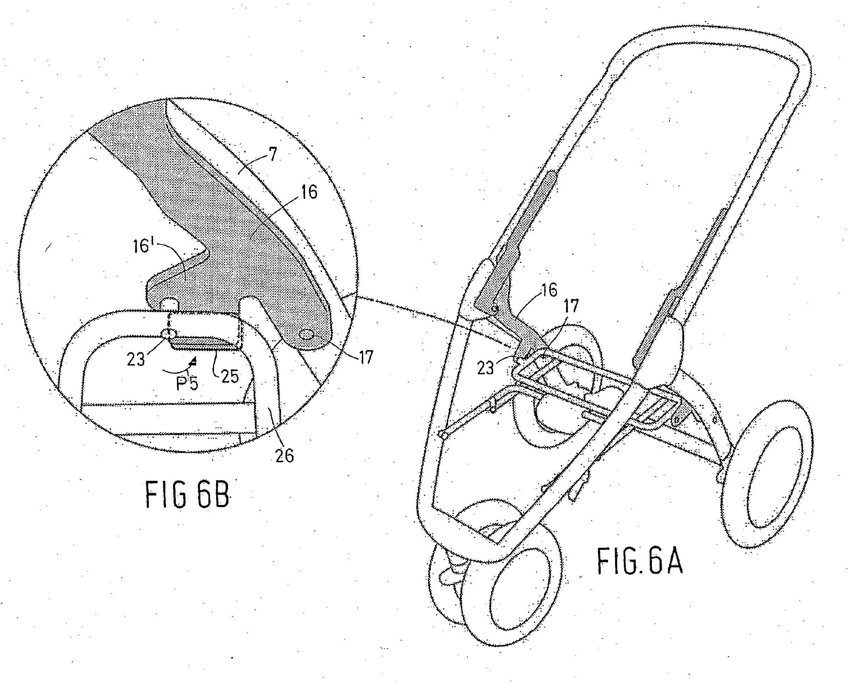

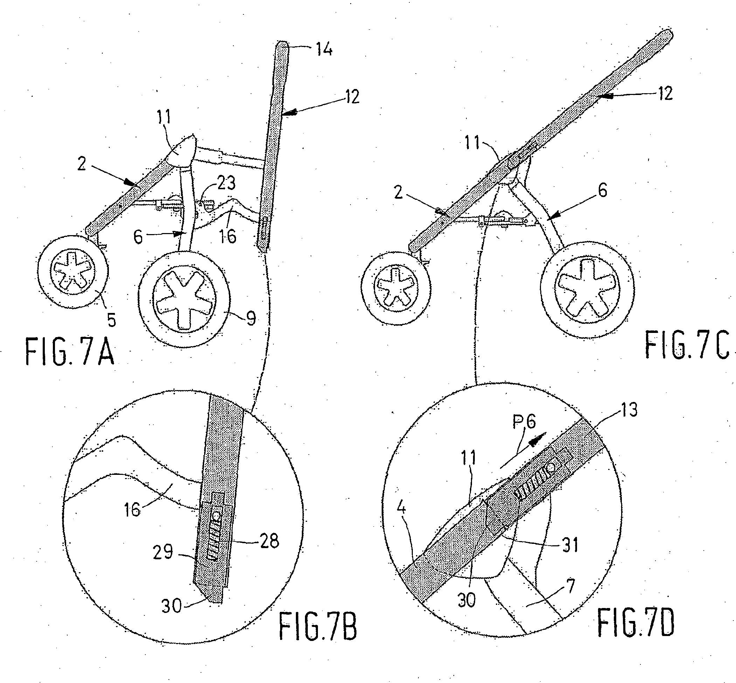

Fixation of the stroller in the position shown in figure 6A can take place in various ways. One way is shown in figures 7A-7D, in which the third frame part 12 is provided with a block 29 comprising a bevelled portion 30 on each of the sides remote from the handle 14, which block is movable against the spring force of a spring 28. The portions 30 fit in open ends 31 of the rods 4 of the first frame part 2 under spring force.

When the frame is unfolded, the bevelled portion 30 comes into contact with the tube 4 and the block 29 is pressed into the tube 13 against the spring force of the spring 28. Once the tube 13 is in line with the tube 4, the block 29 is pressed into the tube 4 under the influence of the spring 28 (see figure 7D), as a result of which the first frame part 2 and the third frame part 12 are firmly interconnected. In this position the plate element 25 also occupies the position shown in figure 6B, so that collapsing of the fourth frame part is prevented in a simple manner as well.

Where a user wishes to collapse the stroller 1, the blocks 29, which are accessible via the outer side of the tubes 13, and moved in the direction indicated by the arrow P6 against the spring force of the springs 28, causing the bevelled portions 30 to move out of the tubes 4. Then the third frame part 12 can be moved in the manner as shown in figures 2A-2D. To collapse the fourth frame parts 21, the user will take hold of a knob 32 attached to the second member 27, so that the first member 26 and the second member 27 are moved together (see figure 2D, 3C).

It is also possible to configure the fourth part as a telescopic part, in which case the members forming the fourth frame part can be slid together and apart. It is also possible for the pivot axis 24 to be moved downwards instead of upwards upon collapsing of the fourth frame part.

## Claims

1. A stroller (1) comprising a collapsible frame, which frame at least comprises:
- a first frame part (2) provided with at least one front wheel (5),
- a second frame part (6) provided with at least one rear wheel (9), which second frame part (6) is pivotally connected on a side remote from the rear wheel (9) to a side of the first frame part (2) remote from the front wheel (5) via a first pivot axis (10),
- a third frame.part (12) provided with a handle (14),
which frame further comprises:
- at least one first pivot arm (16), which is pivotally connected to a side of the third frame part (12) remote from the handle (14) with a first side via a second pivot axis (15), and which is pivotally connected to said second frame part (6) with a second side remote from said first side via a third pivot axis (17) at a position between the rear wheel (9) and the first pivot axis (10),
- at least one second pivot arm (19), which is pivotally connected to the third frame part (12) with a first side, at a position between the second pivot axis (15) and the handle (14), and which is pivotally connected to the first and the second frame part (2, 6) with a second side remote from the first side at a position near the first pivot axis (10), with the third frame part (12) being positioned on a side of the second frame part (6) remote from the first frame part (2) in a collapsed position of the stroller (1), **characterised in that** the frame further comprises a collapsible fourth frame part (21), which is pivotally connected to the first frame part (2) with a first side (22) via a pivot axis (22) at a position between the front wheel (5) and the first pivot axis (10), which fourth frame part (21) is pivotally connected to the first pivot arm (16) with a second side remote from the first side via a pivot axis (23) at a position between the second and the third pivot axis (15, 17), with the front wheel being positioned closer to the rear wheel (9) in the collapsed position of the fourth frame part (21) than in the unfolded position of the fourth frame part (21).

2. A stroller according to claim 1, **characterised in that** the second pivot arm is at least partially in line with the first and the third frame part in an unfolded position of the stroller.

3. A stroller according to any one of the preceding claims, **characterised in that** the frame can be locked in an unfolded position.

4. A stroller according to any one of the preceding claims, **characterised in that** the stroller is provided with two parallel first pivot arms, which are disposed on either side of the frame.

5. A stroller according to any one of the preceding claims, **characterised in that** the stroller is provided with two parallel second pivot arms, which are disposed on either side of the frame.

6. A stroller according to any one of the preceding claims, **characterised in that** the fourth frame part can be locked in the unfolded position.

## Patentansprüche

1. Kinderwagen (1) mit einem faltbaren Rahmen, wobei der Rahmen zumindest
- ein erstes Rahmenteil (2), versehen mit mindestens einem Vorderrad (5),
- ein zweites Rahmenteil (6), versehen mit mindestens einem Hinterrad (9), wobei das zweite Rahmenteil (6) an einer vom Hinterrad (9) entfernten Seite mit einer vom Vorderrad (5) entfernten Seite des ersten Rahmenteils (2) über eine erste Schwenkachse (10) schwenkbar verbunden ist, und
- ein drittes, mit einem Griff (14) versehenes Rahmenteil (12) umfasst, wobei der Rahmen ferner umfasst:
- mindestens einen ersten Schwenkarm (16), der mit einer ersten Seite über eine zweite Schwenkachse (15) schwenkbar mit einer vom Griff (14) entfernten Seite des dritten Rahmenteils (12) verbunden ist, und der mit einer zweiten, von der ersten Seite entfernten Seite über eine dritte Schwenkachse (17) mit dem zweiten Rahmenteil (6) an einer Stelle zwischen dem Hinterrad (9) und der ersten Schwenkachse (10) schwenkbar verbunden ist,
- mindestens einen zweiten Schwenkarm (19), der an einer Stelle zwischen der zweiten Schwenkachse (15) und dem Griff (14) mit einer ersten Seite mit dem dritten Rahmenteil (12) schwenkbar verbunden ist, und der mit einer von der ersten Seite entfernten zweiten Seite an einer Stelle nahe der ersten Schwenkachse (10) mit dem ersten und dem zweiten Rahmenteil (2, 6) schwenkbar verbunden ist, wobei das dritte Rahmenteil (12) auf einer in gefalteter Lage des Kinderwagens (1) von dem ersten Rahmenteil (2) entfernten Seite des zweiten Rahmenteil (6) angeordnet ist, **dadurch gekennzeichnet, dass** der Rahmen ferner ein faltbares viertes Rahmenteil (21) umfasst, das mit einer ersten Seite (22) über eine Schwenkachse (22) an einer Stelle zwischen dem Vorderrad (5) und der ersten Schwenkachse (10) mit dem ersten Rahmenteil (2) schwenkbar verbunden ist, wobei das vierte Rahmenteil (21) mit einer zweiten von der ersten Seite entfernten Seite mit dem ersten Schwenkarm (16) über eine Schwenkachse (23) ein einer Stelle zwischen der zweiten und der dritten Schwenkachse (15, 17) schwenkbar verbunden ist, wobei das Vorderrad in gefalteter Stellung des vierten Rahmenteils (21) sich näher an dem Hinterrad (9) befindet als in entfalteter Stellung des vierten Rahmenteils (21).

2. Kinderwagen nach Anspruch 1, **dadurch gekennzeichnet, dass** der zweite Schwenkarm in entfalteter Stellung des Kinderwagens mindestens teilweise mit dem ersten und dem dritten Rahmenteil fluchtet.

3. Kinderwagen nach einem der vorangehenden Ansprüche, **dadurch gekennzeichnet, dass** der Rahmen in entfalteter Stellung verriegelt werden kann.

4. Kinderwagen nach einem der vorangehenden Ansprüche, **dadurch gekennzeichnet, dass** der Kinderwagen mit zwei parallelen ersten Schwenkarmen versehen ist, die an beiden Seiten des Rahmens angebracht sind.

5. Kinderwagen nach einem der vorangehenden Ansprüche, **dadurch gekennzeichnet, dass** der Kinderwagen mit zwei parallelen zweiten Schwenkarmen versehen ist die an beiden Seiten des Rahmens angebracht sind.

6. Kinderwagen nach einem der vorangehenden Ansprüche, **dadurch gekennzeichnet, dass** das vierte Rahmenteil in der entfalteten Stellung verriegelt werden kann.

## Revendications

1. Poussette (1) comprenant un cadre pliable, lequel cadre comprend au moins :
- une première partie de cadre (2) dotée d'au moins une roue avant (5),
- une deuxième partie de cadre (6) dotée d'au moins une roue arrière (9), laquelle deuxième partie de cadre (6) est reliée de façon pivotante sur un côté à distance de la roue arrière (9) à un côté de la première partie de cadre (2) à distance de la roue avant (5) par le biais d'un premier axe de pivot (10),
- une troisième partie de cadre (12) dotée d'une poignée (14),
lequel cadre comprend en outre :
- au moins un premier bras de pivot (16), qui est relié de façon pivotante à un côté de la troisième partie de cadre (12) à distance de la poignée (14) avec un premier côté par le biais d'un deuxième axe de pivot (15), et qui est relié de façon pivotante à ladite deuxième partie de cadre (6) avec un deuxième côté à distance dudit premier côté par le biais d'un troisième axe de pivot (17) à une position entre la roue arrière (9) et le premier axe de pivot (10),
- au moins un deuxième bras de pivot (19), qui est relié de façon pivotante à la troisième partie de cadre (12) avec un premier côté, à une position entre le deuxième axe de pivot (15) et la poignée (14), et qui est relié de façon pivotante à la première et à la deuxième partie de cadre (2, 6) avec un deuxième côté à distance du premier côté à une position proche du premier axe de pivot (10), la troisième partie de cadre (12) étant positionnée sur un côté de la deuxième partie de cadre (6) à distance de la première partie de cadre (2) dans une position repliée de la poussette (1), **caractérisée en ce que** le cadre comprend en outre une quatrième partie de cadre pliable (21), qui est reliée de façon pivotante à la première partie de cadre (2) avec un premier côté (22) par le biais d'un axe de pivot (22) à une position entre la roue avant (5) et le premier axe de pivot (10), laquelle quatrième partie de cadre (21) est reliée de façon pivotante au premier bras de pivot (16) avec un deuxième côté à distance du premier côté par le biais d'un axe de pivot (23) à une position entre le deuxième et le troisième axe de pivot (15, 17), la roue avant étant positionnée plus près de la roue arrière (9) dans la position repliée de la quatrième partie de cadre (21) que dans la position dépliée de la quatrième partie de cadre (21).

2. Poussette selon la revendication 1, **caractérisée en ce que** le deuxième bras de pivot est au moins partiellement en ligne avec la première et la troisième partie de cadre dans une position dépliée de la poussette.

3. Poussette selon l'une quelconque des revendications précédentes, **caractérisée en ce que** le cadre peut être verrouillé dans une position dépliée.

4. Poussette selon l'une quelconque des revendications précédentes, **caractérisée en ce que** la poussette est dotée de deux premiers bras de pivot parallèles, qui sont disposés de part et d'autre du cadre.

5. Poussette selon l'une quelconque des revendications précédentes, **caractérisée en ce que** la poussette est dotée de deux deuxièmes bras de pivot parallèles, qui sont disposés de part et d'autre du cadre.

6. Poussette selon l'une quelconque des revendications précédentes, **caractérisée en ce que** la quatrième partie de cadre peut être verrouillée dans la position dépliée.
